# EUROPÄISCHE PATENTSCHRIFT

(11) **EP 0 843 334 B1**
(45) Veröffentlichungstag und Bekanntmachung des Hinweises auf die Patenterteilung: **16.01.2002**
(21) Anmeldenummer: 97118686.1
(22) Anmeldetag: 28.10.1997
(51) Int. Cl.: H01J 29/82

(54) **Halter für Entmagnetisierungsspulen von Bildröhren**
Holder for image tube demagnetisation coils
Fixation des bobines de démagnétisation pour un tube d'image

(30) Priorität: 14.11.1996 DE 19647120
(43) Veröffentlichungstag der Anmeldung: 20.05.1998
(73) Patentinhaber: Kunststoff-Spritzgussteile Gerhard Höpke, 27232 Sulingen (DE)
(72) Erfinder: Höpke, Gerhard, 27232 Sulingen (DE)
(74) Vertreter: König, Norbert

(56) Entgegenhaltungen:
- DE-U- 9 013 839
- DE-U- 9 201 124
- US-A- 4 812 946

## Beschreibung

Die Erfindung betrifft einen Halter für Entmagnetisierungsspulen von Bildröhren gemäß Oberbegriff des Anspruchs 1.

Durch das GM 92 01 124 ist eine Befestigungsschlaufe für Entmagnetisierungsspulen von Bildröhren bekannt, die ein erstes Schlaufenteil zum Befestigen an der Entmagnetisierungsspule und ein zweites Schlaufenteil zum Anbringen an einer Befestigungslasche der Bildröhre aufweist. Der erste Schlaufenteil weist die Form einer schmalen gestreckten Bucht auf. Der zweite Schlaufenteil ist breiter als der erste Schlaufenteil ausgebildet und weist zwei bogenförmig oder einwärts abgebogen oder abgeknickt in die Schenkel des ersten Schlaufenteiles übergehende Schenkel auf zur Bildung von schrägen Schultern für das geschlossene Ende des ersten Schlaufenteiles, das nach Art eines Makramé-Knotens an der Entmagnetisierungsspule befestigt wird. Diese bekannte Befestigungsschlaufe ist nur geeignet für relativ kleine Bildröhren mit entsprechend kleinem Krümmungsradius der Entmagnetisierungsspulen in den Ecken der Bildröhre. Bildröhren mit Abmessungen größer als etwa 63 cm weisen Eckrundungen mit relativ großem Krümmungsradius auf, die eine Eckhalterung mit entsprechend großem Krümmungsradius für die Entmagnetisierungsspule erfordern, so daß die bekannte Befestigungsschlaufe hierfür nicht geeignet ist.

Für große Bildröhren sind große, dicke Halter aus relativ hartem Material, beispielsweise Polystyrol, bekannt, die sehr teuer und unhandlich sind. Diese bekannten Halter erlauben keine Vormontage beim Lieferanten der Entmagnetisierungsspulen, sondern ermöglichen eine Montage erst bei der Anbringung der Entmagnetisierungsspulen an den Bildschirmen, da beim Verpacken und Transport der Verpackungseinheiten, die bis zu 1000 Stück enthalten können, die Gefahr einer Beschädigung der Spulenisolation besteht.

Die Aufgabe der vorliegenden Erfindung besteht darin, einen Halter für Entmagnetisierungsspulen der eingangs genannten Art anzugeben, der eine Halterung der Entmagnetisierungsspulen im Bereich der Ecken der Bildröhren mit großem Krümmungsradius ermöglicht und an der Entmagnetisierungsspule vormontierbar ist; gleichzeitig soll am Halter das übliche Erdungsseil mit Spannfeder befestigt werden können.

Diese Aufgabe wird durch die Erfindung gemäß Anspruch 1 gelöst.

Vorteilhafte und zweckmäßige Weiterbildungen der erfindungsgemäßen Aufgabenlösung sind in den Unteransprüchen angegeben.

Die Erfindung soll nachfolgend anhand der beigefügten Zeichnung, in der ein Ausführungsbeispiel dargestellt ist, näher erläutert werden.

Es zeigt
- Fig. 1: schematisch die Rückseite einer Bildröhre mit Entmagnetisierungsspule und Erdungsseil sowie erfindungsgemäß ausgebildeten Haltern für die Anbringung der Entmagnetisierungsspule und das Erdungsseil im Bereich der Ecken der Bildröhre,
- Fig. 2: eine erste Ausführungsform eines erfindungsgemäßen Halters in der Draufsicht,
- Fig. 3: einen Schnitt A-A durch den Halter nach Fig. 2,
- Fig. 4: eine Draufsicht auf einen an einer Entmagnetisierungsspule angebrachten Halter nach Fig. 2,
- Fig. 5: eine Seitenansicht des Halters nach Fig. 4 ohne Entmagnetisierungsspule,
- Fig. 6: eine zweite Ausführungsform eines erfindungsgemäßen Halters in der Draufsicht,
- Fig. 7: einen Schnitt B-B durch den Halter nach Fig. 6 und
- Fig. 8: eine Draufsicht auf einen an einer Entmagnetisierungsspule angebrachten Halter nach Fig. 6.

Gleiche Bauteile in den Figuren der Zeichnung sind mit den gleichen Bezugszeichen versehen.

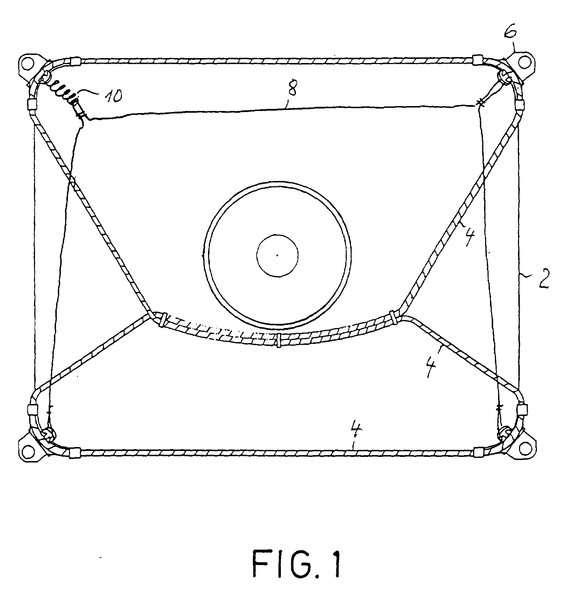

Die Fig. 1 der Zeichnung zeigt die Rückseite einer Bildröhre 2 mit einer Entmagnetisierungsspule 4, welche in den Ecken der Bildröhre mit Hilfe von Haltern an Befestigungslaschen (nicht dargestellt) der Bildröhre befestigt sind. An den Haltern ist auch ein Erdungsseil 8 mit Spannfeder 10 angebracht.

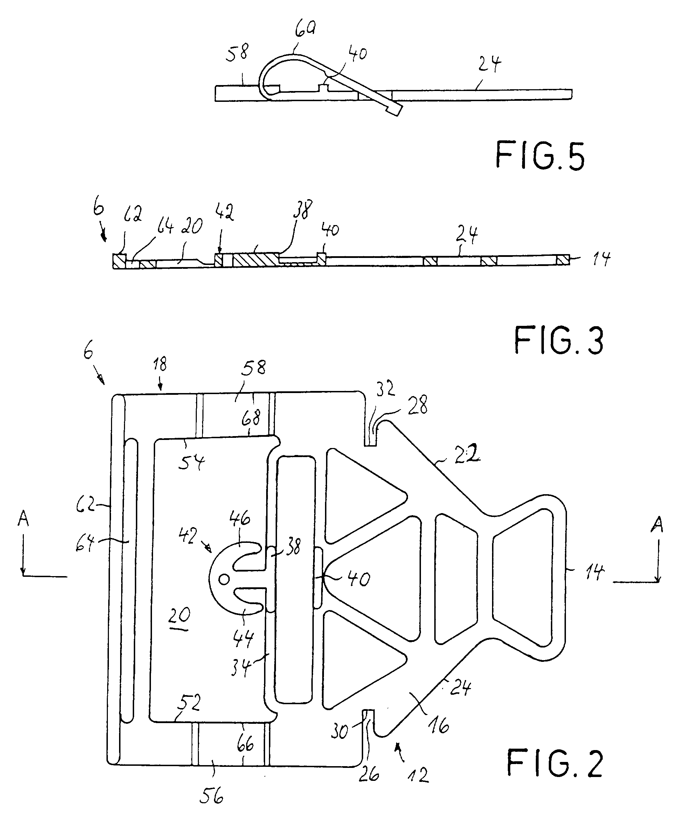

Der Halter 6, vgl. insbesondere Fig. 2, 3 und 4, besteht aus einem dünnen Spritzteil, vorzugsweise aus einem elastischen Kunststoff, und weist ein erstes vorzugsweise etwa dreieckförmiges Teil 12 mit einer etwa trapezförmigen Öse 14 am freien Ende und ein zweites an der Dreieckbasis 16 angeformtes rechteckförmiges Teil 18 auf, in dem eine rechteckförmige Öffnung 20 ausgebildet ist.

Dreieckschenkel 22, 24 des ersten Teiles 12 weisen am Übergang zum rechteckförmigen Teil 18 parallel zur Basis des ersten Teiles 16 ausgebildete Nuten 26, 28 auf. Der Abstand von Böden 30, 32 der Nuten 26, 28 voneinander ist etwa gleich oder größer als die Breite A der Öffnung 20, gemessen in Richtung einer am Teil 12 angeformten Seite 34 des zweiten Teiles 18.

Die relativ breit ausgebildete Seite 34 des Teiles 18 weist auf einer Seite oder beiden Seiten mittig zwei beabstandete entlang der Seite verlaufende Rippen 38, 40 auf.

An der Seite 34 ist ferner eine in die Öffnung 20 ragende, flache Aufnahme 42 für das Erdungsseil 8 mit zwei seitlichen Haken 44, 46 angeformt.

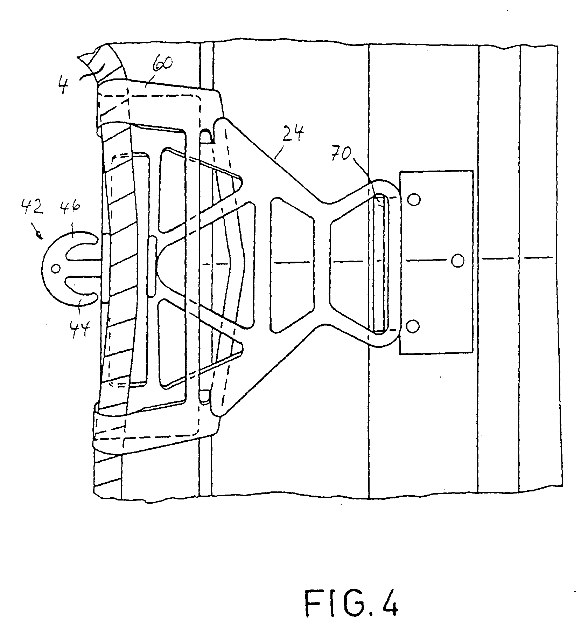

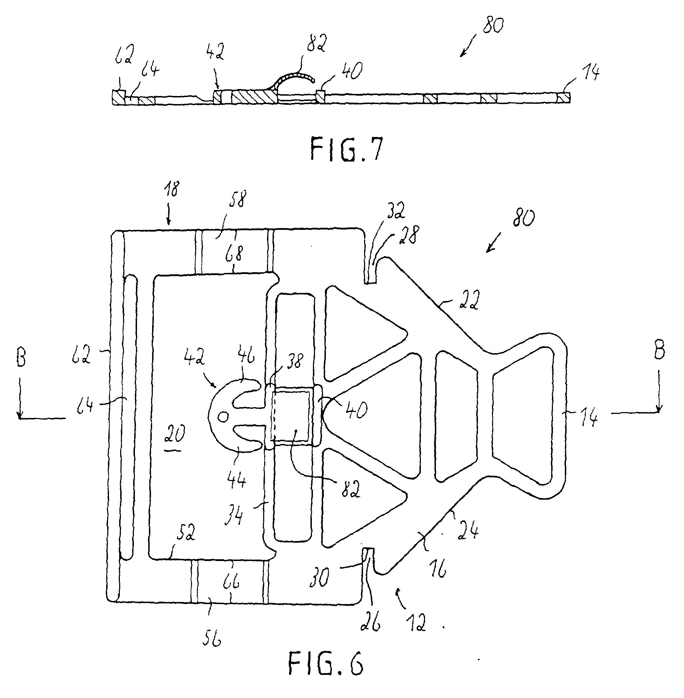

Zur Anbringung des Halters 6 an einer Entmagnetisierungsspule 4 wird das Teil 12 um die Spule herumgelegt und durch die Öffnung 20 hindurchgeführt und hindurchgezogen, bis seitliche Teile 52, 54 von zwei senkrecht zur Seite 34 verlaufenden Seiten 56, 58 des rechteckförmigen Teiles 18 in die Nuten 26, 28 einrasten, wodurch eine Schlaufe 60 gebildet wird, wie dies in den Fig. 4 und 5 dargestellt ist.

In einer der Seite 34 gegenüberliegenden Rechteckseite 62 kann ein Langloch 64 ausgebildet sein, durch das das Teil 12 hindurchziehbar ist, dessen Schmalseiten in die Nuten 26 und 28 einrasten, wie dies in der Fig. 4 zu sehen ist.

Das Umbiegen des Halters 6 um die Entmagnetisierungsspule und somit die Ausbildung der Schlaufe 60 wird dadurch erleichtert, daß die Seiten 56 und 58 des rechteckförmigen Teiles 18 in einem zur Seite 34 benachbarten Bereich 66, 68 mit geringerer Stärke ausgebildet sind.

Im montierten Zustand des Halters 6 liegt die Entmagnetisierungsspule etwa zwischen den Rippen 38, 40, die eine Verstärkung bilden und verhindern, daß beim Straffziehen sich der Halter sozusagen zusammenfaltet und dadurch seine Funktion zur Gewährleistung einer Biegung mit großem Krümmungsradius im Eckbereich der Bildröhre nicht mehr erfüllen kann.

Es ist auch möglich, vom rechteckförmigen Teil 18 nur die Seiten 56 und 58 als zwei Laschen auszubilden, die mit Hilfe jeweils eines Loches zur Ausbildung von Schlaufen in Richtung Rechteckseite 34 umlegbar und auf entsprechend ausgebildete Rastelemente aufklemmbar sind.

Die trapezförmige Öse am freien Ende des dreieckförmigen Teiles 12 wird bei der Montage hinter Befestigungslaschen 70 der Bildröhre eingehakt, wie dies in der Fig. 4 dargestellt ist.

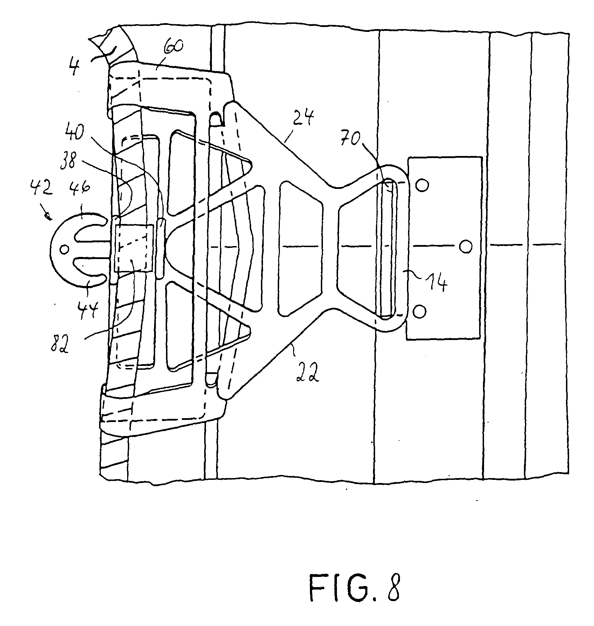

Die Fig. 6 bis 8 zeigen einen Halter 80, der sich vom Halter 6 nach den Fig. 2 bis 5 dadurch unterscheidet, daß an die Verstärkungsrippe 38 eine gewölbte Schutzkappe 82 angeformt ist, die sich in Richtung der Verstärkungsrippe 40 erstreckt, diese aber nicht berührt, vgl. insbesondere die Fig. 6 und 7. Ansonsten ist der Halter 80 identisch mit dem Halter 6 ausgebildet, so daß auf die obige Beschreibung des Halters 6 verwiesen werden kann.

Im montierten Zustand des Halters 80 liegt die gewölbte Schutzkappe auf der Entmagnetisierungsspule auf und dient als Schutz der Spulenisolation der Entmagnetisierungsspule vor mechanischen Beschädigungen durch beispielsweise einen Schraubenzieher, mit dem die schon mit der Entmagnetisierungsspule versehene Bildröhre in das Gehäuse beispielsweise eines Fernsehgerätes geschraubt wird.

Die in die Öffnung 20 hineinragende, flache Aufnahme 42 für das Erdungsseil 8 dient als Montagehilfe, indem durch Verschwenken der Aufnahme und damit durch Verdrehen der Verstärkungsrippe 38 die Schutzkappe 82 in die richtige Position über die Entmagnetisierungsspule gebracht wird. Nach dem Montieren (Durchschlaufen) des Halters um die Entmagnetisierungsspule liegt die Schutzkappe 82 nämlich zunächst unter der Entmagnetisierungsspule und muß dann durch Verdrehen der Verstärkungsrippe 38 mittels der Aufnahme 42 nach oben über die Entmagnetisierungsspule gebracht werden.

Aus spritzwerkzeugtechnischen Gründen wird das Material des Halters 80 zwischen den Verstärkungsrippen 38 und 40 unterhalb der Schutzkappe 82, die beispielsweise eine Breite von 2 cm haben kann, vorzugsweise ausgespart, wie dies aus den Fig. 6 bis 8 ersichtlich ist.

## Patentansprüche

1. Halter für eine Entmagnetisierungsspule einer Bildröhre, **gekennzeichnet durch** ein flaches Spritzteil, bestehend aus einem ersten Teil (12), an dem eine Öse (14) zur Befestigung an der Bildröhre ausgebildet ist, und mit einem zweiten Teil (18), in dem eine Öffnung (20) oder ein Langloch ausgebildet ist, **durch** die das erste Teil (12) zur Bildung einer die Entmagnetisierungsspule (4) aufnehmenden Schlaufe (60) führbar ist und deren seitliche Teile (52, 54) dabei in seitliche Nuten (26, 28) des ersten Teiles (16) einrasten.

2. Halter nach Anspruch 1, **dadurch gekennzeichnet, daß** das erste Teil (12) dreieckförmig ausgebildet ist.

3. Halter nach Anspruch 1, **dadurch gekennzeichnet, daß** das erste Teil (12) eine trapezförmige Öse (14) an seinem freien Ende aufweist.

4. Halter nach Anspruch 1, **dadurch gekennzeichnet, daß** das erste Teil (12) ein zweites, an seiner Basis (16) angeformtes rechteckförmiges Teil (18) aufweist, in dem die rechteckförmige Öffnung (20) ausgebildet ist.

5. Halter nach Anspruch 2, **dadurch gekennzeichnet, daß** die Nuten (26, 28) in den Dreieckschenkel (22, 24) des ersten Teiles (12) am Übergang zu dem rechteckförmigen Teil (18) parallel zur Basis des ersten Teiles (16) ausgebildet sind.

6. Halter nach Anspruch 5, **dadurch gekennzeichnet, daß** der Abstand von Böden (30, 32) der Nuten (26, 28) voneinander etwa gleich oder größer ist als die Breite der Öffnung (20) in dem zweiten Teil (18).

7. Halter nach Anspruch 1, **dadurch gekennzeichnet, daß** eine Seite (34) des zweiten Teiles (18) zwei in Längsrichtung des Halters zueinander beabstandete, entlang der Seite (34) quer zur Längsrichtung des Halters verlaufende Verstärkungsrippen (38, 40) aufweist, die quer zur Längsrichtung des Halters mittig an diesem angeordnet sind.

8. Halter nach Anspruch 7, **dadurch gekennzeichnet, daß** an der Seite (34) des zweiten Teiles (18) eine flache Aufnahme (42) für ein Erdungsseil mit seitlichen Haken (44, 46) angeformt ist.

9. Halter nach Anspruch 7 oder 8, **dadurch gekennzeichnet, daß** an die eine Verstärkungsrippe (38) eine gewölbte Schutzkappe (82) angeformt ist, die sich in Richtung der anderen Verstärkungsrippe (40) erstreckt und deren freies Ende beabstandet zu dieser Verstärkungsrippe (40) angeordnet ist und die zur Abdeckung und zum Schutz der Entmagnetisierungsspule (4) vorgesehen ist.

10. Halter nach Anspruch 9, **dadurch gekennzeichnet, daß** die Schutzkappe (82) an der benachbart zur Aufnahme (42) angeordneten Verstärkungsrippe (38) angeordnet ist.

## Claims

1. Holder for an image tube demagnetization coil, **characterized by** a flat injection-moulded part having a first part (12) on which an eye (14) for fixing to the image tube is formed and a second part (18) in which an opening (20) or elongated hole is formed, through which the first part (12) can be passed to form a loop (60) for retaining the demagnetization coil (4), and whose side parts (52, 54) simultaneously clip into slots (26, 28) in the sides of the first part (16).

2. Holder according to claim 1, **characterized in that** the first part (12) is triangular in shape.

3. Holder according to claim 1, **characterized in that** the first part (12) has a trapezium-shaped eye (14) at its unattached end.

4. Holder according to claim 1, **characterized in that** the first part (12) has a second, rectangular part (18) formed on its base (16) in which the rectangular opening (20) is formed.

5. Holder according to claim 2, **characterized in that** the slots (26, 28) are formed in the legs (22, 24) of the triangular first part (12) at the transition to the rectangular part (18) parallel with the base of the first part (16).

6. Holder according to claim 5, **characterized in that** the distance between the bases (30, 32) of the slots (26, 28) is approximately equal to or greater than the width of the opening (20) in the second part (18).

7. Holder according to claim 1, **characterized in that** one side (34) of the second part (18) has two strengthening ribs (38, 40) running transverse to the longitudinal direction of the holder along the side (34) which are spaced apart in the longitudinal direction of the holder and positioned centrally on the holder transverse to its longitudinal direction.

8. Holder according to claim 7, **characterized in that** a flat connector (42) with hooks (44, 46) on its sides is formed on the side (34) of the second part (18) for connecting an earthing cable.

9. Holder according to claim 7 or 8, **characterized in that** a curved protective cap (82) provided for covering and protecting the demagnetization coil (4) is formed on one strengthening rib (38) such that it extends in the direction of the other strengthening rib (40) and whereby its unattached end is positioned at a distance from said strengthening rib (40).

10. Holder according to claim 9, **characterized in that** the protective cap (82) is positioned on the strengthening rib (38) next to the connector (42).

## Revendications

1. Support pour une bobine de démagnétisation d'un tube image,
**caractérisé par** une pièce plane moulée par injection constituée d'une première partie (12) sur laquelle est formé un oeillet (14) de fixation au tube image et avec une seconde partie (18) dans laquelle est formée une ouverture (20) ou un trou oblong à travers lequel peut être guidée la première partie (12) pour former une boucle fermée (60) recevant la bobine de démagnétisation (60) et dont les parties latérales (52, 54) se verrouillent alors dans des rainures latérales (26, 28) de la première partie (16).

2. Support selon la revendication 1,
**caractérisé en ce que** la première partie (12) est de forme triangulaire.

3. Support selon la revendication 1,
**caractérisé en ce que** la première partie (12) présente à son extrémité libre un oeillet (14) de forme trapézoïdale.

4. Support selon la revendication 1,
**caractérisé en ce que** la première partie (12) présente une seconde partie (18) rectangulaire formée à sa base (16), dans laquelle est formée l'ouverture (20) rectangulaire.

5. Support selon la revendication 2,
**caractérisé en ce que** les rainures (26, 28) dans l'aile triangulaire (22, 24) de la première partie (12) sont formées, à la transition en la partie rectangulaire (18), parallèlement à la base de la première partie (16).

6. Support selon la revendication 5,
**caractérisé en ce que** l'écartement de fonds (30, 32) des rainures (26, 28) les uns des autres est sensiblement égal ou supérieur à la largeur de l'ouverture (20) dans la seconde partie (18).

7. Support selon la revendication 1,
**caractérisé en ce qu'**un côté (34) de la seconde partie (18) présente deux nervures de renforcement (38, 40) écartées l'une de l'autre, s'étendant le long du côté (34) transversalement à la direction longitudinale du support, qui sont disposées transversalement à la direction longitudinale du support centralement à celui-ci.

8. Support selon la revendication 7,
**caractérisé en ce qu'**un logement plat (42) pour un câble de mise à la terre est formé avec des crochets latéraux (44, 46) sur le côté (34) de la seconde partie (18).

9. Support selon la revendication 7 ou 8,
**caractérisé en ce que**, sur l'une des nervures de renforcement (38) est formé un capot de protection (82) voûté qui s'étend en direction de l'autre nervure de renforcement (40) et dont l'extrémité libre est disposée écartée de cette nervure de renforcement (40) et qui est prévu pour recouvrir et pour protéger la bobine de démagnétisation (4).

10. Support selon la revendication 9,
**caractérisé en ce que** le capot de protection (82) est disposé sur la nervure de renforcement (38) disposée au voisinage du logement (42).
